# FASCICULE DE BREVET EUROPEEN

(11) **EP 3 365 663 B1**
(45) Date de publication et mention de la délivrance du brevet: **02.10.2019**
(21) Numéro de dépôt: 16809117.1
(22) Date de dépôt: 21.10.2016
(51) Int. Cl.: G01B 5/00, G01N 21/90, G01B 11/24

(54) **PROCEDE ET INSTALLATION POUR ASSURER L'INSPECTION OPTIQUE DE RECIPIENTS SELON LEUR PROFIL INCLUANT LE FOND**
VERFAHREN UND VORRICHTUNG ZUR OPTISCHEN INSPEKTION DES PROFILS VON BEHÄLTERN, WOBEI DAS PROFIL DEN BODEN UMFASST
METHOD AND APPARATUS FOR OPTICALLY INSPECTING THE PROFILE OF CONTAINERS, THE PROFILE INCLUDING THE BOTTOM

(30) Priorité: 21.10.2015 FR 1560022
(43) Date de publication de la demande: 29.08.2018
(73) Titulaire: Tiama, 69390 Vourles (FR)
(72) Inventeur: PINTO, Antonio, 69390 Charly (FR)
(74) Mandataire: Cabinet Beau de Loménie
(86) Numéro de dépôt international: PCT/FR2016/052727
(87) Numéro de publication internationale: WO 2017/068295

(56) Documents cités:
- WO-A1-2012/042582
- WO-A1-2015/146628
- FR-A1- 3 000 193
- GB-A- 1 063 479
- JP-A- H0 634 576
- JP-A- 2005 091 060
- JP-A- 2007 240 469
- JP-A- 2012 117 900
- US-A- 4 433 785
- US-A- 4 644 151
- US-A- 6 089 108
- US-A1- 2006 192 954
- US-A1- 2014 088 916

## Description

La présente invention concerne le domaine technique de l'inspection optique d'objets creux ou récipients au sens général, tels que par exemple des bouteilles, des pots, des flacons notamment en verre en vue d'effectuer des mesures optiques dans lesquelles intervient au moins une partie du fond du récipient.

L'objet de l'invention trouve des applications particulièrement avantageuses dans le domaine des mesures de la verticalité de récipients ou de la détection d'un défaut d'orthogonalité du fond du récipient par rapport à son axe de symétrie, désigné usuellement, par fond boiteux.

Dans le domaine technique de l'inspection de récipients notamment en verre tels que des bouteilles, il apparait le besoin de mesurer la verticalité des récipients, pour garantir en particulier, leur embouteillage ou leur conditionnement. La mesure de la verticalité d'un récipient donne une information importante sur les caractéristiques dimensionnelles d'un récipient permettant de déceler son défaut de verticalité lorsque la mesure dépasse une valeur de référence. Dans l'état de la technique, de nombreuses solutions techniques ont été proposées pour mesurer la verticalité des récipients.

D'une manière générale, une installation de mesure de la verticalité des récipients comporte un système de déplacement des récipients jusqu'à un poste d'inspection optique des récipients. Les récipients sont supportés par une table lors de leur transfert jusqu'au poste d'inspection, puis lors de leur évacuation du poste d'inspection, après l'opération d'inspection. La table présente une plaque de glissement sur laquelle repose le fond d'un récipient lorsque le récipient est inspecté par ledit poste. Au cours de l'opération d'inspection, le récipient est entraîné en rotation sur lui-même sur au moins un tour.

Classiquement, le poste d'inspection optique comporte au moins une source de lumière et un ou plusieurs capteurs d'images. Différentes techniques d'inspection sont décrites notamment par les documents WO 2012/042582, US 7 010 863 ou EP 0 341 849. La demande de brevet FR 3 000 193 propose un procédé de mesure de la verticalité de récipients visant à remédier aux inconvénients des techniques connues. Un tel procédé de mesure nécessite de réaliser des images matricielles notamment du talon des récipients. Or, il apparait en pratique une difficulté pour obtenir une image correcte du talon des récipients.

Il est également connu par la demande de brevet GB 1063479, un dispositif permettant de détecter des défauts apparaissant au niveau du fond de récipients. Chaque récipient est déplacé sur une table de support jusqu'à un poste optique d'inspection, comportant un plateau de réception du récipient. Ce plateau d'inspection à ventouse est soulevé au-dessus de la table et est entrainé en rotation, lors de l'opération d'inspection réalisée à l'aide de sources de lumière et de capteurs de lumière.

Chaque récipient est donc déplacé pour cette opération d'inspection de sorte que de telles manipulations sont une source de dégradation de ces récipients. La combinaison d'un mouvement de montée et de rotation conduit à une instabilité pour les récipients. Par ailleurs le récipient n'est pas constamment guidé lors du transfert du récipient de la table de support sur le plateau d'inspection et du plateau d'inspection sur la table de support.

Les demandes de brevet WO2015/146628 et US2006/0192954, décrivent des installations analogues visant à entrainer en rotation et déplacer verticalement chaque récipient pendant l'opération d'inspection. Ces installations présentent les mêmes inconvénients que le dispositif décrit par le document GB 1063479.

La demande de brevet JP2005 091060 décrit une installation d'inspection pour des récipients entrainés en rotation. A cet effet, chaque récipient est supporté par des galets tout en étant entrainé en rotation autour de son axe au niveau du corps du récipient.

La présente invention vise donc à remédier aux inconvénients de l'état de la technique en proposant une installation comportant un poste d'inspection optique permettant d'effectuer des mesures précises dans lesquelles intervient au moins une partie du fond du récipient, ces mesures étant réalisées sans risque de dégradation des récipients.

Pour atteindre un tel objectif, l'installation comporte au moins un poste d'inspection optique de récipients, selon la revendication 1, comportant au moins une source de lumière et au moins un capteur de lumière, l'installation comportant une table de support pour les récipients présentant une plaque de glissement sur laquelle repose le fond d'un récipient lors de son inspection par ledit poste en étant positionné entre la source de lumière et le capteur de lumière, l'installation comportant un système de déplacement des récipients assurant d'une part, le positionnement successif des récipients sur la plaque de glissement pendant le déroulement de l'opération d'inspection et d'autre part, leurs transferts successifs du poste d'inspection après l'opération d'inspection.

Selon l'invention, la plaque de glissement comporte au moins une partie mobile escamotable bordée de part et d'autre par des parties fixes de la plaque de glissement, cette partie étant mobile sous l'action d'un actionneur assurant le déplacement de cette partie mobile entre une position de transfert pour laquelle cette partie mobile est affleurant avec la table et une position d'inspection dans laquelle cette partie mobile est abaissée par rapport aux parties fixes de sorte que une partie du fond du récipient est écartée de la plaque de glissement et en ce que la source de lumière et le capteur de lumière sont positionnés par rapport la partie mobile de la plaque de glissement, de manière qu'en position d'inspection de la partie mobile, le capteur puisse recevoir un faisceau de rayons lumineux émis par la source de lumière, se propageant dans un volume d'inspection dans lequel est situé au moins une partie du fond du récipient écartée de la plaque de glissement.

De plus, l'installation selon l'invention peut comporter en outre en combinaison au moins l'une et/ou l'autre des caractéristiques additionnelles suivantes :
- la plaque de glissement délimite deux volumes d'inspection pour deux parties symétriques du fond du récipient, à l'aide de deux parties mobiles escamotables bordées de part et d'autre par des parties fixes de la plaque de glissement la ou les parties mobiles de la plaque de glissement font partie d'un équipage mobile guidé en déplacement vertical et coopérant avec une butée haute lorsque le ou les parties mobiles de la plaque de glissement occupent la position de transfert, l'équipage mobile étant maintenu en contact sur la butée sous l'action d'un effort de rappel élastique ;
- la butée haute est équipée d'un système assurant le réglage vertical de la partie mobile par rapport à la table ;
- la ou les parties mobiles de la plaque de glissement sont fixées de manière démontable sur l'équipage mobile ;
- pour chaque partie mobile, est installée au moins une buse de soufflage d'air débouchant en dessous de la partie mobile et communiquant avec un dispositif d'alimentation en air ;
- l'actionneur de la partie mobile de la plaque de glissement est relié à une unité de commande à laquelle sont reliés le système de déplacement des récipients et le poste d'inspection, cette unité de commande pilotant l'actionneur pour placer la partie mobile :
   - dans sa position de transfert pour permettre au système de déplacement d'amener un récipient sur la plaque de glissement ;
   - dans sa position d'inspection pendant l'opération d'inspection ;
   - et à la fin de l'opération d'inspection, dans sa position de transfert pour permettre au système de déplacement de transférer le récipient placé sur la plaque de glissement ;
- le capteur de lumière est un capteur d'images ;
- la source de lumière et le capteur d'images sont positionnés par rapport à la partie mobile de la plaque de glissement, de manière qu'en position d'inspection de la partie mobile, le capteur puisse prendre une image du profil d'au moins du jable et de la partie voisine du fond du récipient écartée de la plaque de glissement.

Un autre objet de l'invention est de proposer un procédé d'inspection par un poste d'inspection optique, de récipients reposant par leur fond sur une table de support, le procédé, selon la revendication 10, comportant les étapes suivantes :
- positionner successivement des récipients sur une plaque de glissement de la table sur laquelle repose le fond d'un récipient lors de l'opération d'inspection par ledit poste en étant positionné entre une source de lumière et un capteur de lumière ;
- transférer successivement les récipients en dehors du poste d'inspection après l'opération d'inspection.

Selon l'invention, le procédé consiste :
- à positionner le récipient par rapport à au moins une partie de la plaque de glissement qui est mobile et placée avant l'acheminement d'un récipient au poste d'inspection, dans une position de transfert pour laquelle cette partie mobile est affleurant avec la table ;
- à abaisser avant l'opération d'inspection, cette partie mobile dans laquelle cette partie mobile est située en retrait du fond du récipient dont au moins une partie est écartée de la plaque de glissement de manière que le capteur puisse recevoir un faisceau de rayons lumineux se propageant dans un volume d'inspection dans lequel est situé au moins une partie du fond du récipient écartée de la plaque de glissement ;
- à maintenir la partie mobile dans sa position d'inspection lors de l'opération d'inspection ;
- après l'opération d'inspection et avant le transfert du récipient en dehors du poste d'inspection, à déplacer la partie mobile dans sa position de transfert.

De plus, le procédé selon l'invention peut consister en outre en combinaison au moins l'une et/ou l'autre des caractéristiques additionnelles suivantes :
- à abaisser, au moins une partie mobile de la plaque de glissement dans la position d'inspection dans laquelle deux parties symétriques du fond du récipient sont écartées de la plaque de glissement ;
- lors de l'opération d'inspection, à assurer la rotation du récipient autour de son axe vertical selon au moins un tour ;
- à récupérer par le capteur de lumière, lors de la rotation du récipient, les faisceaux de rayons lumineux se propageant dans les volumes d'inspection dans lesquels sont situées au moins deux parties symétriques du fond du récipient écartées de la plaque de glissement, et à analyser les faisceaux de rayons lumineux récupérés pour détecter un défaut d'orthogonalité du fond par rapport à l'axe de symétrie du récipient ;
- à utiliser en tant que capteur de lumière, un capteur d'images et à positionner la source de lumière et le capteur d'images par rapport à la partie mobile de la plaque de glissement, de manière qu'en position d'inspection de la partie mobile, le capteur puisse prendre une image du profil d'au moins du jable et de la partie voisine du fond du récipient écartée de la plaque de glissement.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective d'une installation d'inspection conforme à l'invention, illustrée en position d'inspection.
Les **Figures 2** et **3** sont des vues en coupe élévation transversale de l'installation d'inspection conforme à l'invention prises sensiblement selon les lignes **A-A** de la **Figure 1**, cette installation étant illustrée respectivement en position de transfert et en position d'inspection pour les récipients.
Les **Figures 4** et **5** sont des vues en coupe élévation de l'installation d'inspection conforme à l'invention prise au niveau d'une partie mobile de la plaque de glissement, cette installation étant illustrée respectivement en position de transfert et en position d'inspection pour les récipients.
Les **Figures 6** et **7** sont des vues en coupe élévation transversale de l'installation d'inspection conforme à l'invention, illustrée respectivement en position de transfert et en position d'inspection pour les récipients.
La **Figure 8** est une vue schématique de dessus de l'installation d'inspection conforme à l'invention.
La **Figure 9** est une image du profil d'un récipient obtenue par l'installation d'inspection conforme à l'invention.

L'objet de l'invention concerne une installation **1** comportant au moins un poste d'inspection optique **2** de récipients **3** par exemple en verre tels que des bouteilles. De manière classique, chaque récipient **3** présente un fond **4** à partir duquel s'élève un corps vertical **5.** Le fond **4** se raccorde au corps vertical **5** par un talon ou jable **6.**

L'installation **1** comporte une table de support **7** pour les récipients **3.** Cette table de support **7** présente, au niveau du poste d'inspection **2**, une plaque de glissement **8** sur laquelle repose le fond **4** d'un récipient lors de son inspection par ledit poste. L'installation **1** comporte également un système **9** de déplacement des récipients assurant d'une part, l'amenée des récipients **3** au poste d'inspection **2**, et d'autre part, leurs transferts du poste d'inspection **2** après l'opération d'inspection. Dans l'exemple illustré, ce système de déplacement **9** comporte une étoile de transfert **11** pourvue d'alvéoles **12** destinées à recevoir chacune, le corps d'un récipient. Cette étoile de transfert **11** est commandée en rotation pour assurer le positionnement successif des bouteilles dans le poste d'inspection **2.** Bien entendu, chaque récipient **3** est maintenu dans le poste d'inspection pendant une durée nécessaire à l'opération d'inspection prévue. Selon l'exemple illustré sur les dessins, le système de déplacement **9** est rotatif mais il est clair que l'amenée et l'enlèvement des récipients peuvent être réalisés par un système de déplacement différent tel que linéaire.

Le poste d'inspection **2** est aménagé en vue d'effectuer des mesures optiques dans lesquelles intervient au moins une partie du fond du récipient. Selon un exemple préféré de réalisation, le poste d'inspection **2** est adapté pour déterminer la mesure de verticalité de récipients conformément à la méthode décrite dans le brevet FR 3 000 193. Selon un autre exemple de réalisation, le poste d'inspection **2** est adapté pour assurer la détection d'un défaut d'orthogonalité du fond du récipient par rapport à son axe de symétrie, désigné usuellement, par fond boiteux.

D'une manière générale, le poste d'inspection **2** comporte au moins une source de lumière **14** et au moins un capteur de lumière **15** apte à recevoir un faisceau de rayons lumineux émis par la source de lumière. Par faisceau de rayons lumineux, il est désigné l'ensemble des rayons lumineux émis par une source de lumière de dimension finie, dans une direction donnée. Un faisceau de rayons lumineux peut être divergent, parallèle ou convergent. Un faisceau de rayons lumineux peut être délimité par exemple lorsqu'il traverse un orifice ou lorsqu'il est occulté par un objet.

La ou les sources de lumière **14** sont positionnées d'un côté du récipient c'est-à-dire d'un côté de la plaque de glissement **8** tandis que le ou les capteurs de lumière **15** sont placés de l'autre côté du récipient c'est-à-dire de l'autre côté de la plaque de glissement **8**. Ainsi, chaque récipient **3** est positionné au poste d'inspection, entre la source de lumière **14** et le capteur de lumière **15** permettant d'observer chaque récipient, de côté ou latéralement en incluant une partie du fond du récipient.

Ce poste d'inspection **2** comporte une unité d'analyse et de traitement non représentée, reliée à chaque capteur de lumière **15** et configurée pour déterminer un défaut d'orthogonalité ou la mesure de verticalité des récipients. Cette unité d'analyse et de traitement qui ne fait pas partie précisément de l'objet de l'invention n'est pas décrite plus précisément.

Selon une application préférée illustrée sur les dessins, le poste d'inspection **2** est adapté pour déterminer la mesure de verticalité de récipients conformément à la méthode décrite dans le brevet FR 3 000 193. Selon cet exemple de réalisation, le poste d'inspection **2** comporte un système **17** de mise en rotation du récipient autour de son axe vertical, lors de l'opération d'inspection.

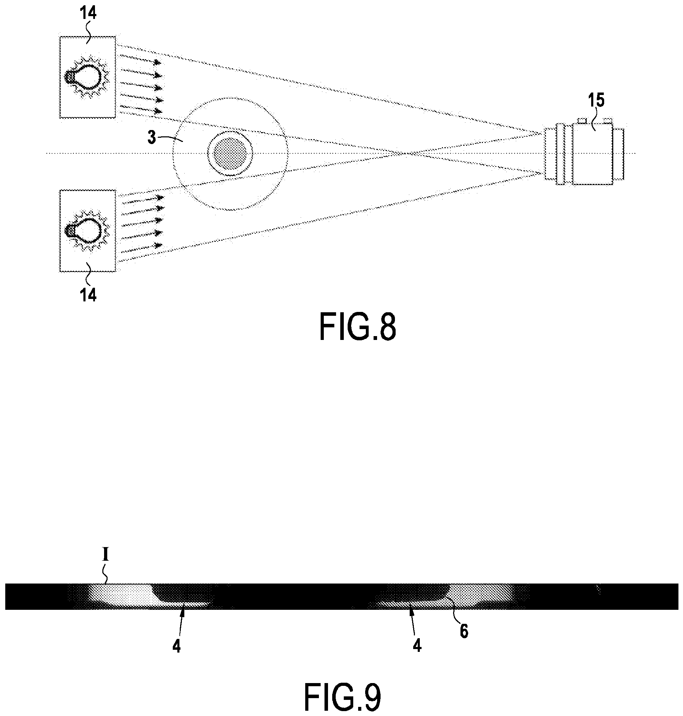

Selon cette application, chaque capteur de lumière **15** est un capteur d'images c'est à dire une caméra matricielle pourvue de son objectif. Au moins l'un de ces capteurs d'images prend des images matricielles comportant les parties gauche et droite du talon des récipients. Dans une configuration non représentée, deux capteurs d'images séparés peuvent être utilisés, le premier capteur d'images prenant des images matricielles comportant la partie gauche du talon tandis que le deuxième capteur d'images prend des images de la partie droite du talon. Comme cela sera expliqué en détail dans la suite de la description, un tel capteur d'images **15** reçoit deux faisceaux de rayons lumineux émis par au moins une et dans l'exemple illustré, deux sources de lumière **14** (**Fig. 8**). Les sources de lumière **14** sont positionnés d'un côté de la plaque de glissement **8** tandis que le capteur de lumière **15** est placé de l'autre côté de la plaque de glissement **8.** Ainsi, chaque récipient **3** est positionné au poste d'inspection, entre les sources de lumière **14** et le capteur de lumière **15** permettant d'observer le profil de chaque récipient, pris au niveau du talon et du fond du récipient.

Le poste d'inspection **2** peut être configuré pour effectuer d'autres types de mesures optiques dans lesquelles intervient au moins une partie du fond du récipient. Tel est le cas par exemple d'un poste détectant un défaut d'orthogonalité du fond du récipient par rapport à son axe vertical de symétrie. Selon cette application, le poste d'inspection **2** comporte en tant que capteur de lumière **15**, une simple cellule qui mesure la puissance d'un faisceau de rayons lumineux, émis par une source de lumière **14** située à l'opposé de la cellule par rapport au récipient. Cette source de lumière dirige un faisceau de rayons lumineux vers la cellule avec une intensité constante. Pendant l'opération de mesure, le récipient **3** est entraîné en rotation et le faisceau de rayons lumineux est limité supérieurement par le fond du récipient et inférieurement par la plaque de glissement de la table de support ou par un obturateur fixe servant de référence.

Lorsque la distance entre le fond du récipient et la référence diminue (respectivement augmente), le faisceau de rayons lumineux est partiellement réduit (respectivement élargit) de sorte que la puissance lumineuse reçue par la cellule est fonction de cette distance. Il est ainsi possible à l'aide de deux dispositifs de ce type disposés symétriquement par rapport à l'axe de rotation, en analysant les variations de puissance sur les deux cellules, de détecter des anomalies dans la rotation du fond des récipients. En partant de l'hypothèse que le corps du récipient tourne autour d'un axe vertical de symétrie, alors les anomalies de rotation proviennent d'un défaut d'orthogonalité du fond par rapport à l'axe vertical de symétrie, appelé également fond boiteux.

Selon une caractéristique de l'invention, la plaque de glissement **8** comporte au moins une partie **18** mobile sous l'action d'un actionneur **19** assurant le déplacement de cette partie mobile entre une position de transfert pour laquelle cette partie mobile **18** est affleurant avec la table **7** et une position d'inspection dans laquelle cette partie mobile **18** est abaissée de sorte qu'une partie du fond **4** du récipient est écartée par rapport à la plaque de glissement **8**.

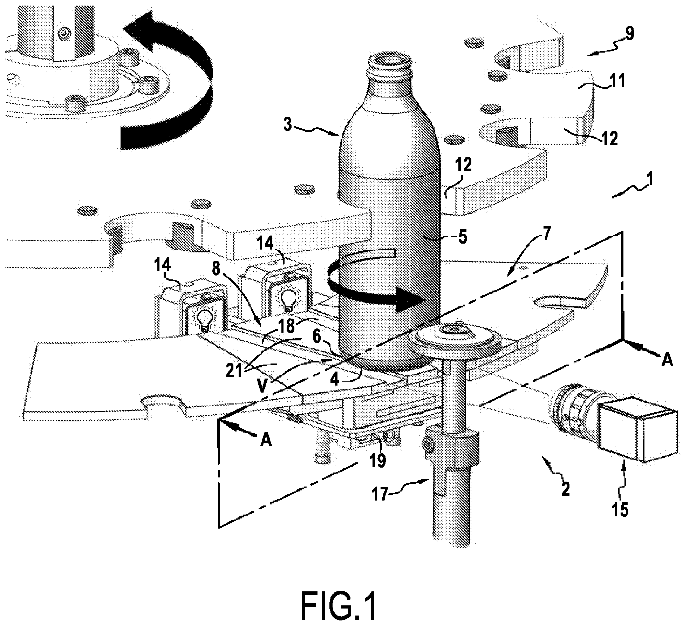

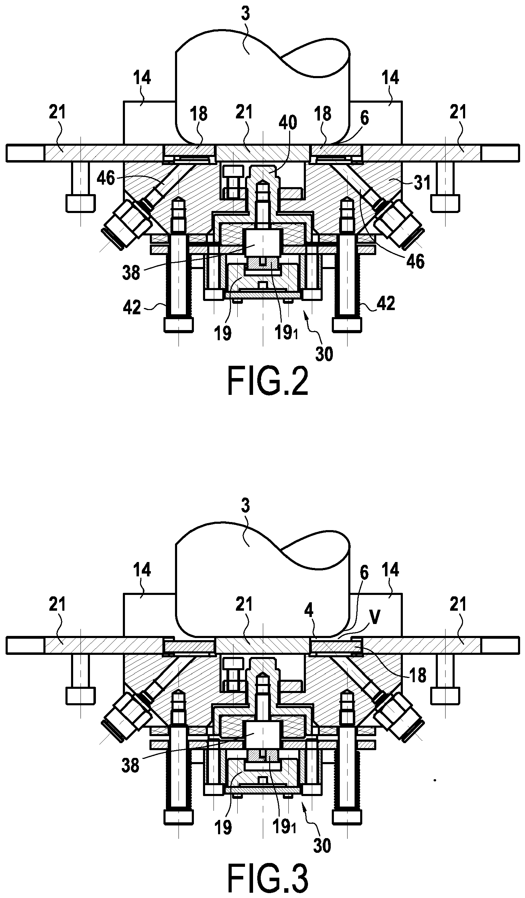

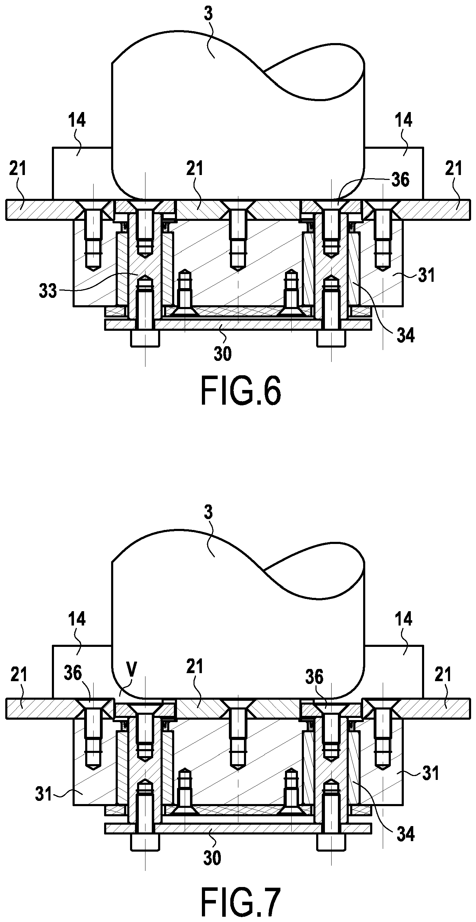

Comme illustré aux **Fig. 1** à **7**, la plaque de glissement **8** comporte deux parties **18** mobiles, situées en dessous de deux parties du fond du récipient, symétriquement opposées. Bien entendu, il peut être prévu un exemple de réalisation dans lequel, la plaque de glissement **8** comporte une seule partie **18** mobile située en dessous d'une partie du fond du récipient. Il doit être compris que dans la position de transfert illustrée aux **Fig. 2**, **4**, **6**, la plaque de glissement **8** présente une surface plane de glissement, sans aucune partie en saillie. Dans cette position de transfert, un récipient **3** situé en amont du poste d'inspection **2** peut être déplacé de la table de support **7** sur la plaque de glissement **8** pour être placé au niveau du poste d'inspection **2**. Le récipient **3** glisse ainsi sur une surface plane de la table de support **7** jusqu'à la plaque de glissement **8**. De même, dans cette position de transfert, un récipient **3** ayant été inspecté par le poste **2**, peut être déplacé de la plaque de glissement **8**, sur la table de support **7**, en dehors du poste d'inspection **2**. Le récipient **3** glisse également sur une surface plane en quittant la plaque de glissement **8** pour être reprise sur la table de support **7**.

Tel que cela ressort des **Fig. 1**, **3**, **5**, **7**, lorsque les parties mobiles **18** de la plaque de glissement **8** occupent leur position d'inspection, une partie du fond **4** du récipient est écartée de la plaque de glissement **8**. Ainsi, lorsque les parties mobiles **18** occupent cette position d'inspection, le capteur **15** peut recevoir un faisceau de rayons lumineux se propageant dans un volume d'inspection **V** dans lequel est situé au moins une partie du fond **4** du récipient qui est écartée des parties mobiles **18** de la plaque de glissement **8** (**Fig. 9**). Ainsi, entre le fond **4** du récipient et la plaque de glissement **8**, le faisceau de rayons lumineux provenant de la ou des sources de lumière **14** se propage librement jusqu'au capteur de lumière **15**. Il est ainsi possible d'observer le profil ou la silhouette du fond **4** et de préférence du fond **4** et du jable **6** pris selon un côté du récipient ou de préférence de part et d'autre du récipient.

Chaque partie mobile **18** se présente sous la forme d'une plaque allongée s'établissant sur toute la largeur de la table de support **7**, en prenant place à l'intérieur d'une découpe aménagée dans la table de support **7**. La forme de la découpe est adaptée pour permettre le parcours de la lumière entre la source de lumière **14** et le capteur de lumière **15**, selon la ou les directions d'observation, elles-mêmes dépendantes des positions du capteur de lumière, du centre optique de son objectif et la direction de l'axe optique. La forme de la découpe est également adaptée aux formes et aux dimensions des récipients **3**. Par exemple, pour permettre le contrôle de gammes de récipients de différents diamètres, il peut être prévu plusieurs jeux de plaques de glissement qui sont changés pour passer de récipients de petits diamètres à des récipients de grands diamètres.

Par ailleurs, les sources de lumière **14** sont positionnées d'un côté de la plaque de glissement **8**, au niveau sensiblement de cette plaque de glissement tandis que le capteur de lumière **15** est placé de l'autre côté de la plaque de glissement **8**, au niveau sensiblement de cette plaque de glissement. Ainsi, lorsque la partie mobile **18** occupe sa position d'inspection, une partie de l'espace située en dessous du fond **4** du récipient et entre les sources de lumière **14** et le capteur d'images **15** est libérée permettant le libre passage de la lumière jusqu'au capteur d'images (**Fig. 1**, **3**, **5**, **7**).

Dans l'exemple de réalisation illustré par les **Fig. 1** à **7**, la plaque de glissement **8** comporte au moins une partie mobile **18** qui est escamotable ou abaissée c'est-à-dire qui s'étend en retrait ou en dessous par rapport à des parties fixes **21** de la plaque de glissement **8** qui bordent cette partie mobile **18**. Selon un exemple préféré illustré, la plaque de glissement **8** comporte deux parties mobiles escamotables **18** bordées chacune de part et d'autre, par des parties fixes **21** de la plaque de glissement. Ainsi, en position d'inspection de la plaque de glissement **8**, les parties mobiles **18** sont situées à un niveau inférieur par rapport au plan occupé par les parties fixes **21** permettant de dégager de part et d'autre du récipient, une partie du fond **4** du récipient par rapport à la plaque de glissement. En position d'inspection, les parties mobiles **18** sont écartées du fond du récipient, en étant abaissées pour être situées en dessous du fond du récipient. Le décalage de la partie mobile **18** par rapport à la partie fixe **21** est une mesure plus ou moins grande typiquement comprise entre 0,2 mm et 2mm. Bien entendu, ce décalage dépend des contraintes du contrôle optique. Les parties mobiles **18** et fixes **21** sont ajustées pour limiter le jeu entre ces parties mobiles et fixes afin qu'en position de transfert, la surface de glissement présentée par la table soit la plus continue possible.

Ainsi chaque récipient **3** se déplace dans un même plan, lorsque le récipient est amené sur la plaque de glissement **8** et lorsque le récipient est transféré ou évacué de la plaque de glissement. Il est à noter que le récipient reste dans ce plan lorsque les parties mobiles **18** sont escamotées ou abaissées.

Selon l'application préférée visant à déterminer la mesure de verticalité de récipients conformément à la méthode décrite dans le brevet FR 3 000 193, les parties mobiles **18** sont situées en vis à vis de chaque partie du fond **4** voisine du jable **6** du récipient. Ainsi, en position d'inspection, le récipient reste en contact permanent avec la plaque de glissement **8** en étant supporté dans la partie médiane de son fond, par une partie fixe centrale **21**.

Avantageusement, il est à noter que la plaque de glissement **8** délimite deux volumes d'inspection **V** pour deux parties symétriques du fond du récipient, à l'aide des deux parties mobiles **18** escamotables bordées de part et d'autre par des parties fixes de la plaque de glissement.

Le déplacement de la ou des plaques mobiles **18** entre la position de transfert et la position d'inspection est assuré à l'aide d'un actionneur **19**. La trajectoire de déplacement entre ses deux positions peut être quelconque. Dans la description qui suit, le déplacement de la ou les plaques mobiles **18** est vertical mais il est clair que le déplacement peut résulter d'une combinaison de mouvements rectilignes et/ou courbes, ou d'un mouvement de pivotement par exemple.

Tel que cela ressort plus précisément des **Figures**, la ou les parties mobiles **18** de la plaque de glissement **8** font partie d'un équipage mobile **30** guidé dans l'exemple préféré illustré, en déplacement vertical par rapport à un support **31** fixé à la table **7**. Cet équipage mobile **30** est pourvu d'un système de guidage en translation comportant au moins une et dans l'exemple illustré, 4 tiges **33** coopérant avec des douilles **34** portées par le support **31**.

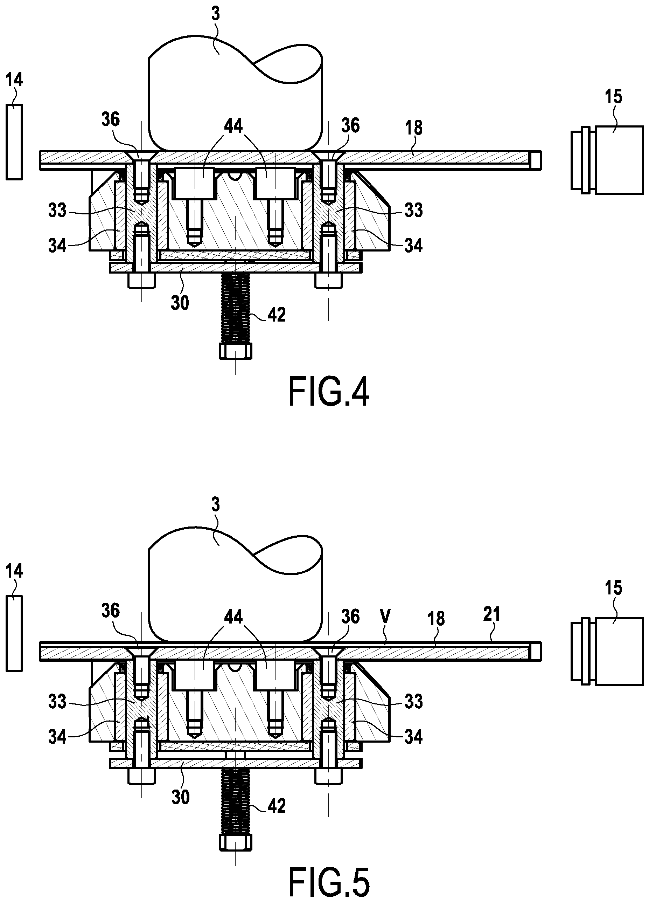

Selon une caractéristique avantageuse de réalisation, le ou les parties mobiles **18** de la plaque de glissement **8** sont fixées de manière démontable sur l'équipage mobile **30**. Ainsi, tel que cela ressort plus précisément des **Fig. 4** à **7**, chaque partie mobile **18** est fixée à l'équipage mobile **30** à l'aide de vis d'assemblage **36**. Ces parties mobiles **18** peuvent ainsi être changées facilement en cas d'usure.

Cet équipage mobile **30** est déplacé en translation à l'aide de l'actionneur **19**, réalisé de toute manière appropriée comme par exemple, par un vérin électrique ou pneumatique ou par un électro-aimant voire, par une came entraînée en pivotement ou par un montage excentrique ou à levier. Dans l'exemple illustré, l'actionneur **19** est un vérin pneumatique dont le corps est monté sur l'équipage mobile **30**. Cet actionneur **19** comporte une tige **19₁** agissant sur le support **31** par l'intermédiaire d'une butée haute **38**.

Selon une caractéristique avantageuse de réalisation, cet équipage mobile **30** coopère avec la butée haute **38** lorsque le ou les parties mobiles **18** de la plaque de glissement occupent la position de transfert. Cette butée haute **38** qui est réalisée en un matériau d'amortissement est fixée sur le support **31**. Selon un mode avantageux de réalisation, la butée haute **38** est équipée d'un système **40** assurant le réglage vertical de la partie mobile **18** par rapport à la table **7**. Ce système **40** par exemple du type à vis, permet de régler la position verticale de butée de l'équipage mobile **30** par rapport au support **31**. Ce réglage permet de garantir l'affleurement entre les parties mobiles **18** et les parties fixes **21** de la plaque de glissement, dans la position de transfert.

Avantageusement, l'équipage mobile **30** est maintenu en contact sur la butée haute **38** sous l'action d'un effort de rappel élastique exercé par des ressorts **42**. En d'autres termes, les ressorts **42** sollicitent en permanence l'équipage mobile **30** afin d'être en contact sur sa butée haute **38**. Ainsi, la position de défaut est la position de transfert.

Il est à noter que l'équipage mobile **30** vient également en contact avec des butées basses **44** portées par le support **31** lorsque les parties mobiles **18** et par suite, l'équipage mobile occupent la position d'inspection.

Selon une autre caractéristique, l'installation comporte pour chaque partie mobile **18**, au moins une buse **46** de soufflage d'air débouchant en dessous de la partie mobile et communiquant avec un dispositif d'alimentation en air. L'air soufflé permet d'enlever les éventuels poussières ou déchets évitant un coincement des parties mobiles **18** par rapport aux parties fixes **21**.

L'actionneur **19** de la partie mobile **18** de la plaque de glissement est relié à une unité de commande à laquelle sont reliés le système de déplacement **9** des récipients et le poste d'inspection **2**. Cette unité de commande pilote l'actionneur **19** pour placer chaque partie mobile **18** :
- dans sa position de transfert pour permettre au système de déplacement d'amener un récipient sur la plaque de glissement **8** ;
- dans sa position d'escamotée pendant l'opération d'inspection ;
- et à la fin de l'opération d'inspection dans sa position de transfert pour permettre au système de déplacement **9** de transférer le récipient placé sur la plaque de glissement.

L'installation selon l'invention permet la mise en oeuvre d'un procédé d'inspection de récipients reposant par leur fond **4** sur une table de support **7** et amenés successivement à un poste d'inspection dans lequel chaque récipient est positionné sur une plaque de glissement **8.** Ce procédé comporte les étapes suivantes :
- positionner au moins une partie **18** de la plaque de glissement **8** qui est mobile, dans une position de transfert pour laquelle cette partie mobile **18** est affleurant avec la table **7** ;
- déplacer un récipient **3** pour l'amener au poste d'inspection **2** en positionnant le fond **4** du récipient sur la plaque de glissement **8** de la table, ce récipient **3** étant positionné entre au moins une source de lumière **14** et un capteur de lumière **15** pour permettre une observation de profil du récipient incluant au moins une partie du fond du récipient ;
- abaisser, avant l'opération d'inspection, la partie mobile **18** de cette plaque de glissement dans une position escamotée dans laquelle au moins une partie du fond **4** du récipient est écartée de la plaque de glissement de manière que le capteur **15** puisse recevoir un faisceau de rayons lumineux se propageant dans un volume d'inspection **V** dans lequel est situé au moins une partie du fond **4** du récipient écartée de la plaque de glissement ;
- maintenir la partie mobile **18** dans sa position d'inspection lors de l'opération d'inspection ;
- après l'opération d'inspection et avant le transfert du récipient en dehors du poste d'inspection, à faire remonter la partie mobile **18** pour la placer dans sa position de transfert ;
- transférer le récipient **3** en dehors du poste d'inspection après l'opération d'inspection ;
- et à renouveler successivement les étapes ci-dessus pour les récipients suivants à inspecter.

Le procédé d'inspection permet ainsi d'observer de profil les récipients, en englobant une partie du fond des récipients. Il est à noter qu'au moins une partie mobile **18** de la plaque de glissement **8** peut être déplacée verticalement dans la position d'inspection de manière que deux parties symétriques du fond du récipient se trouvent écartées de la plaque de glissement.

En fonction de la nature de l'inspection à réaliser, il est à noter que lors de l'opération d'inspection, il peut être prévu d'entrainer en rotation le récipient autour de son axe vertical selon au moins un tour.

Selon une première application, le procédé vise à récupérer par le capteur de lumière **15**, lors de la rotation du récipient, les faisceaux de rayons lumineux issus de la source de lumière **14** se propageant dans les volumes d'inspection dans lesquels sont situées au moins deux parties symétriques du fond du récipient écartées de la plaque de glissement, et à analyser les faisceaux de rayons lumineux récupérés pour détecter un défaut d'orthogonalité du fond par rapport à l'axe de symétrie du récipient.

Selon une deuxième application, le procédé vise à utiliser en tant que capteur de lumière **15**, un capteur d'images et à positionner la source de lumière **14** et le capteur d'images **15** par rapport à la partie mobile de la plaque de glissement, de manière qu'en position d'inspection de la partie mobile, le capteur puisse prendre une image **I** du profil d'au moins du jable et de la partie voisine du fond du récipient écartée de la plaque de glissement. La **Fig. 9** illustre un exemple d'une image **I** montrant le jable et le fond d'un récipient, obtenue à l'aide d'un capteur d'images **15**.

L'invention n'est pas limitée aux exemples décrits et représentés car diverses modifications peuvent y être apportées sans sortir de son cadre, tel que défini par les revendications en annexe.

## Revendications

1. Installation comportant au moins un poste d'inspection optique (**2**) de récipients (**3**) comportant au moins une source de lumière (**14**) et au moins un capteur de lumière (**15**), l'installation comportant une table de support (**7**) pour les récipients présentant une plaque de glissement (**8**) sur laquelle repose le fond d'un récipient lors de son inspection par ledit poste en étant positionné entre la source de lumière et le capteur de lumière, l'installation comportant un système de déplacement (**9**) des récipients assurant d'une part, le positionnement successif des récipients sur la plaque de glissement pendant le déroulement de l'opération d'inspection et d'autre part, leurs transferts successifs du poste d'inspection après l'opération d'inspection, **caractérisée en ce que** la plaque de glissement (**8**) comporte au moins une partie (**18**) mobile escamotable bordée de part et d'autre par des parties fixes (**21**) de la plaque de glissement, cette partie (**18**) étant mobile sous l'action d'un actionneur (**19**) assurant le déplacement de cette partie mobile (**18**) entre une position de transfert pour laquelle cette partie mobile est affleurant avec la table et une position d'inspection dans laquelle cette partie mobile (**18**) est abaissée par rapport aux parties fixes de sorte que une partie du fond (**4**) du récipient est écartée de la plaque de glissement (**8**) et **en ce que** la source de lumière (**14**) et le capteur de lumière (**15**) sont positionnés par rapport la partie mobile (**18**) de la plaque de glissement, de manière qu'en position d'inspection de la partie mobile, le capteur puisse recevoir un faisceau de rayons lumineux émis par la source de lumière, se propageant dans un volume d'inspection (**V**) dans lequel est situé au moins une partie du fond (**4**) du récipient écartée de la plaque de glissement.

2. Installation selon la revendications 1, **caractérisée en ce que** la plaque de glissement (**8**) délimite deux volumes d'inspection (**V**) pour deux parties symétriques du fond du récipient, à l'aide de deux parties mobiles escamotables (**18**) bordées de part et d'autre par des parties fixes de la plaque de glissement.

3. Installation selon l'une des revendications 1 à 2, **caractérisée en ce que** le ou les parties mobiles (**18**) de la plaque de glissement (**8**) font partie d'un équipage mobile (**30**) guidé en déplacement vertical et coopérant avec une butée haute (**38**) lorsque le ou les parties mobiles (**18**) de la plaque de glissement occupent la position de transfert, l'équipage mobile (**30**) étant maintenu en contact sur la butée sous l'action d'un effort de rappel élastique.

4. Installation selon la revendication 3, **caractérisée en ce que** la butée haute (**38**) est équipée d'un système assurant le réglage vertical de la partie mobile par rapport à la table.

5. Installation selon l'une des revendications 3 à 4, **caractérisée en ce que** la ou les parties mobiles (**18**) de la plaque de glissement (**8**) sont fixées de manière démontable sur l'équipage mobile (**30**).

6. Installation selon l'une des revendications 1 à 5, **caractérisée en ce qu'**elle comporte pour chaque partie mobile, au moins une buse (**46**) de soufflage d'air débouchant en dessous de la partie mobile et communiquant avec un dispositif d'alimentation en air.

7. Installation selon l'une des revendications 1 à 6, **caractérisée en ce que** l'actionneur (**19**) de la partie mobile (**18**) de la plaque de glissement est relié à une unité de commande à laquelle sont reliés le système de déplacement des récipients et le poste d'inspection, cette unité de commande pilotant l'actionneur pour placer la partie mobile :
- dans sa position de transfert pour permettre au système de déplacement d'amener un récipient sur la plaque de glissement ;
- dans sa position d'inspection pendant l'opération d'inspection ;
- et à la fin de l'opération d'inspection, dans sa position de transfert pour permettre au système de déplacement de transférer le récipient placé sur la plaque de glissement.

8. Installation selon l'une des revendications 1 à 7, **caractérisée en ce que** le capteur de lumière (**15**) est un capteur d'images.

9. Installation selon la revendication 8, **caractérisée en ce que** la source de lumière (**14**) et le capteur d'images (**15**) sont positionnés par rapport à la partie mobile de la plaque de glissement, de manière qu'en position d'inspection de la partie mobile, le capteur (**15**) puisse prendre une image du profil d'au moins du jable et de la partie voisine du fond du récipient écartée de la plaque de glissement.

10. Procédé d'inspection par un poste d'inspection optique, de récipients reposant par leur fond (**4**) sur une table de support, le procédé comportant les étapes suivantes :
- positionner successivement des récipients (**3**) sur une plaque de glissement (**8**) de la table sur laquelle repose le fond d'un récipient lors de l'opération d'inspection par ledit poste en étant positionné entre une source de lumière (**14**) et un capteur de lumière (**15**) ;
- transférer successivement les récipients (**3**) en dehors du poste d'inspection (**2**) après l'opération d'inspection, **caractérisé en ce qu'**il consiste :
- à positionner le récipient (**3**) par rapport à au moins une partie (**18**) de la plaque de glissement (**8**) qui est mobile et placée avant l'acheminement d'un récipient au poste d'inspection, dans une position de transfert pour laquelle cette partie mobile est affleurant avec la table ;
- à abaisser avant l'opération d'inspection, cette partie mobile (**18**) dans une position d'inspection dans laquelle cette partie mobile (**18**) est située en retrait du fond (**4**) du récipient dont au moins une partie est écartée de la plaque de glissement de manière que le capteur (**15**) puisse recevoir un faisceau de rayons lumineux se propageant dans un volume d'inspection dans lequel est situé au moins une partie du fond du récipient écartée de la plaque de glissement ;
- à maintenir la partie mobile (**18**) dans sa position d'inspection lors de l'opération d'inspection ;
- après l'opération d'inspection et avant le transfert du récipient en dehors du poste d'inspection, à faire remonter la partie mobile (**18**) dans sa position de transfert.

11. Procédé d'inspection selon la revendication 10, **caractérisé en ce qu'**il consiste à abaisser verticalement deux parties mobiles (**18**) de la plaque de glissement dans la position d'inspection dans laquelle deux parties symétriques du fond du récipient sont écartées de la plaque de glissement.

12. Procédé d'inspection selon les revendications 10 ou 11, **caractérisé en ce qu'**il consiste, lors de l'opération d'inspection, à assurer la rotation du récipient (**3**) autour de son axe vertical selon au moins un tour.

13. Procédé d'inspection selon les revendications 11 et 12, **caractérisé en ce qu'**il consiste à récupérer par le capteur de lumière (**15**), lors de la rotation du récipient, les faisceaux de rayons lumineux se propageant dans les volumes d'inspection (**V**) dans lesquels sont situées au moins deux parties symétriques du fond du récipient écartées de la plaque de glissement, et à analyser les faisceaux de rayons lumineux récupérés pour détecter un défaut d'orthogonalité du fond par rapport à l'axe de symétrie du récipient.

14. Procédé d'inspection selon l'une des revendications 10 à 12, **caractérisé en ce qu'**il consiste à utiliser en tant que capteur de lumière (**15**), un capteur d'images et à positionner la source de lumière (**14**) et le capteur d'images (**15**) par rapport à la partie mobile (**18**) de la plaque de glissement, de manière qu'en position d'inspection de la partie mobile, le capteur (**15**) puisse prendre une image du profil d'au moins du jable (**6**) et de la partie voisine du fond (**4**) du récipient écartée de la plaque de glissement.

## Patentansprüche

1. Vorrichtung, welche zumindest eine Stelle zur optischen Inspektion (2) von Behältern (3) umfasst, die zumindest eine Lichtquelle (14) und zumindest einen Lichtsensor (15) umfasst, wobei die Vorrichtung einen Auflagetisch (7) für die Behälter umfasst, der eine Gleitplatte (8) aufweist, auf welcher der Boden eines Behälters während seiner Inspektion durch die Stelle aufliegt, indem er zwischen der Lichtquelle und dem Lichtsensor positioniert ist, wobei die Vorrichtung ein Verschiebesystem (9) der Behälter umfasst, das einerseits die aufeinanderfolgende Positionierung der Behälter auf der Gleitplatte während des Verlaufs des Inspektionsvorgangs und andererseits ihre aufeinanderfolgenden Übertragungen von der Inspektionsstelle nach dem Inspektionsvorgang gewährleistet, **dadurch gekennzeichnet, dass** die Gleitplatte (8) zumindest einen einziehbaren beweglichen Teil (18) umfasst, der auf beiden Seiten von festen Teilen (21) der Gleitplatte flankiert ist, wobei dieser Teil (18) unter der Wirkung eines Aktors (19) beweglich ist, der die Verschiebung dieses beweglichen Teils (18) zwischen einer Übertragungsposition, für die dieser bewegliche Teil mit dem Tisch bündig ist, und einer Inspektionsposition gewährleistet, in der dieser bewegliche Teil (18) in Bezug auf die festen Teile abgesenkt ist, sodass ein Teil des Bodens (4) des Behälters von der Gleitplatte (8) entfernt ist, und dadurch, dass die Lichtquelle (14) und der Lichtsensor (15) in Bezug auf den beweglichen Teil (18) der Gleitplatte positioniert sind, sodass der Sensor in der Inspektionsposition des beweglichen Teils ein von der Lichtquelle emittiertes Bündel an Lichtstrahlen empfangen kann, das sich in einem Inspektionsvolumen (V) ausbreitet, in dem sich zumindest ein Teil des Bodens (4) des Behälters befindet, der von der Gleitplatte entfernt ist.

2. Vorrichtung nach Anspruch 1, **dadurch gekennzeichnet, dass** die Gleitplatte (8) zwei Inspektionsvolumen (V) für zwei symmetrische Teile des Bodens des Behälters mit Hilfe von zwei einziehbaren beweglichen Teilen (18) begrenzt, die auf beiden Seiten von festen Teilen der Gleitplatte flankiert sind.

3. Vorrichtung nach einem der Ansprüche 1 bis 2, **dadurch gekennzeichnet, dass** der oder die bewegliche(n) Teil(e) (18) der Gleitplatte (8) Teil einer beweglichen Armatur (30) sind, die vertikal verschiebbar geführt wird und mit einem oberen Anschlag (38) kooperiert, wenn der oder die bewegliche(n) Teil(e) (18) der Gleitplatte die Übertragungsposition einnehmen, wobei die bewegliche Armatur (30) unter Wirkung einer elastischen Vorspannungskraft auf dem Anschlag in Kontakt gehalten wird.

4. Vorrichtung nach Anspruch 3, **dadurch gekennzeichnet, dass** der obere Anschlag (38) mit einem System ausgestattet ist, das die vertikale Einstellung des beweglichen Teils in Bezug auf den Tisch gewährleistet.

5. Vorrichtung nach einem der Ansprüche 3 bis 4, **dadurch gekennzeichnet, dass** der oder die bewegliche(n) Teil(e) (18) der Gleitplatte (8) auf abnehmbare Weise auf der beweglichen Armatur (30) befestigt sind.

6. Vorrichtung nach einem der Ansprüche 1 bis 5, **dadurch gekennzeichnet, dass** sie für jeden beweglichen Teil zumindest eine Düse (46) zum Einblasen von Luft umfasst, die unterhalb des beweglichen Teils mündet und mit einer Luftzufuhrvorrichtung in Verbindung steht.

7. Vorrichtung nach einem der Ansprüche 1 bis 6, **dadurch gekennzeichnet, dass** der Aktor (19) des beweglichen Teils (18) der Gleitplatte mit einer Befehlseinheit verbunden ist, mit der das Verschiebesystem der Behälter und die Inspektionsstelle verbunden sind, wobei diese Befehlseinheit den Aktor steuert, um den beweglichen Teil zu platzieren:
- in seiner Übertragungsposition, um dem Verschiebesystem zu ermöglichen, auf der Gleitplatte einen Behälter zuzuführen,
- in seiner inspektionsposition während des Inspektionsvorgangs,
- und am Ende des Inspektionsvorgangs in seiner Übertragungsposition, um dem Verschiebesystem zu ermöglichen, den auf der Gleitplatte platzierten Behälter zu übertragen.

8. Vorrichtung nach einem der Ansprüche 1 bis 7, **dadurch gekennzeichnet, dass** der Lichtsensor (15) ein Bildsensor ist.

9. Vorrichtung nach Anspruch 8, **dadurch gekennzeichnet, dass** die Lichtquelle (14) und der Bildsensor (15) in Bezug auf den beweglichen Teil der Gleitplatte derart positioniert sind, dass der Sensor (15) in der Inspektionsposition des beweglichen Teils ein Bild des Profils von zumindest der Zarge und dem benachbarten Teil des Bodens des Behälters, der von der Gleitplatte entfernt ist, aufnehmen kann.

10. Verfahren zur Inspektion von Behältern, die mit ihrem Boden (4) auf einem Auflagetisch aufliegen, durch eine optische Inspektionsstelle, wobei das Verfahren die folgenden Schritte umfasst:
- aufeinanderfolgendes Positionieren von Behältern (3) auf einer Gleitplatte (8) des Tisches, auf dem der Boden eines Behälters während des Inspektionsvorgangs durch die Stelle aufliegt, indem er zwischen einer Lichtquelle (14) und einem Lichtsensor (15) positioniert ist,
- aufeinanderfolgendes Übertragen der Behälter (3) weg von der Inspektionsstelle (2) nach dem Inspektionsvorgang, **dadurch gekennzeichnet, dass** es besteht:
- aus dem Positionieren des Behälters (3) in Bezug auf zumindest einen Teil (18) der Gleitplatte (8), der beweglich ist und vor der Beförderung eines Behälters an der Inspektionsstelle in einer Übertragungsposition platziert wird, für die dieser bewegliche Teil mit dem Tisch bündig ist,
- aus dem Absenken, vor dem Inspektionsvorgang, dieses beweglichen Teils (18) in eine Inspektionsposition, in der sich dieser bewegliche Teil (18) zurückgesetzt zu dem Boden (4) des Behälters befindet, von dem zumindest ein Teil von der Gleitplatte entfernt ist, sodass der Sensor (15) ein Bündel an Lichtstrahlen empfangen kann, das sich in einem Inspektionsvolumen ausbreitet, in dem sich zumindest ein Teil des Bodens des Behälters befindet, der von der Gleitplatte entfernt ist,
- aus dem Halten des beweglichen Teils (18) in seiner Inspektionsposition während des Inspektionsvorgangs,
- aus dem Erhöhen des beweglichen Teils (18) zurück in seine Übertragungsposition nach dem Inspektionsvorgang und vor dem Übertragen des Behälters weg von der Inspektionsstelle.

11. Verfahren zur Inspektion nach Anspruch 10, **dadurch gekennzeichnet, dass** es aus dem vertikalen Absenken von zwei beweglichen Teilen (18) der Gleitplatte in die Inspektionsposition besteht, in der zwei symmetrische Teile des Bodens des Behälters von der Gleitplatte entfernt sind.

12. Verfahren zur Inspektion nach Anspruch 10 oder 11, **dadurch gekennzeichnet, dass** es aus dem Gewährleisten der Drehung des Behälters (3) um seine vertikale Achse in zumindest einer Umdrehung während des Inspektionsvorgangs besteht.

13. Verfahren zur Inspektion nach den Ansprüchen 11 und 12, **dadurch gekennzeichnet, dass** es aus dem Sammeln der Bündel an Lichtstrahlen, die sich in den Inspektionsvolumen (V) ausbreiten, in denen sich zumindest zwei symmetrische Teile des Bodens des Behälters befinden, die von der Gleitplatte entfernt sind, durch den Lichtsensor (15) während der Drehung des Behälters und aus dem Analysieren der gesammelten Bündel an Lichtstrahlen, um einen Orthogonalitätsfehler des Bodens in Bezug auf die Symmetrieachse des Behälters zu erfassen, besteht.

14. Verfahren zur Inspektion nach einem der Ansprüche 10 bis 12, **dadurch gekennzeichnet, dass** es aus dem Verwenden eines Bildsensors als Lichtsensor (15) und aus dem Positionieren der Lichtquelle (14) und des Bildsensors (15) in Bezug auf den beweglichen Teil (18) der Gleitplatte derart besteht, dass der Sensor (15) in der Inspektionsposition des beweglichen Teils ein Bild des Profils von zumindest der Zarge (6) und dem benachbarten Teil des Bodens (4) des Behälters, der von der Gleitplatte entfernt ist, aufnehmen kann.

## Claims

1. An installation including at least one optical inspection station (2) for inspecting containers (3), the station including at least one light source (14) and at least one light sensor (15), the installation including a support table (7) for the containers, which table presents a slide plate (8) on which the bottom of a container stands while it is being inspected by said station while it is positioned between the light source and the light sensor, the installation including a movement system (9) for moving the containers and serving firstly to position the containers in succession on the slide plate while the inspection operation is taking place, and secondly to transfer them successively from the inspection station after the inspection operation, the installation being **characterized in that** the slide plate (8) includes at least one retractable movable portion (18) lying between stationary portions (21) of the slide plate, the movable portion (18) being movable under the action of an actuator (19) for moving the movable portion (18) between a transfer position in which the movable portion is flush with the table and an inspection position in which the movable portion (18) is lowered relative to the stationary portions such that a portion of the bottom (4) of the container is spaced apart from the slide plate (8), and **in that** the light source (14) and the light sensor (15) are positioned relative to the movable portion (18) of the slide plate in such a manner that in the inspection position of the movable portion the sensor can receive a light beam emitted by the light source and propagating in an inspection volume (V) in which at least a portion of the bottom (4) of the container is situated spaced apart from the slide plate.

2. An installation according to claim 1, **characterized in that** the slide plate (8) defines two inspection volumes (V) for two symmetrical portions of the bottom of the container by using two retractable movable portions (18) each lying between stationary portions of the slide plate.

3. An installation according to claim 1 or claim 2, **characterized in that** the movable portion (s) (18) of the slide plate (8) form portion(s) of piece of movable equipment (30) that is guided in vertical movement and that co-operates with a high abutment (38) when the movable portion(s) (18) of the slide plate occupy the transfer position, the piece of movable equipment (30) being kept in contact with the abutment under the action of a resilient return force.

4. An installation according to claim 2, **characterized in that** the high abutment (38) is provided with a system for providing vertical adjustment of the movable portion relative to the table.

5. An installation according to claim 3 or claim 4, **characterized in that** the movable portion (s) (18) of the slide plate (8) is/are releasably fastened to the movable equipment (30).

6. An installation according to any one of claims 1 to 5, **characterized in that**, for each movable portion, it includes at least one air-blow nozzle (46) opening out under the movable portion and communicating with an air-feed device.

7. An installation according to any one of claims 1 to 6, **characterized in that** the actuator (19) of the movable portion (18) of the slide plate is connected to a control unit having connected thereto the system for moving the containers and the inspection station, the control unit controlling the actuator to place the movable portion:
- in its transfer position in order to enable the movement system to bring a container onto the slide plate;
- in its inspection position during the inspection operation; and
- at the end of the inspection operation, in its transfer position to enable the movement system to transfer the container that is placed on the slide plate.

8. An installation according to any one of claims 1 to 7, **characterized in that** the light sensor (15) is an image sensor.

9. An installation according to claim 8, **characterized in that** the light source (14) and the image sensor (15) are positioned relative to the movable portion of the slide plate in such a manner that in the inspection position of the movable portion the sensor (15) can take an image of the profile of at least the insweep and of the neighboring portion of the bottom of the container spaced apart from the slide plate.

10. An inspection method using an optical inspection station to inspect containers standing via their bottoms (4) on a support table, the method comprising the following steps:
- positioning containers (3) in succession on a slide plate (8) of the table on which the bottom of a container stands during the inspection operation by said station while positioned between a light source (14) and a light sensor (15); and
- transferring the containers (3) successively out from the inspection station (2) after the inspection operation;
the method being **characterized in that** it consists in:
- positioning the container (3) relative to at least one movable portion (18) of the slide plate (8), which portion is placed prior to a container being brought into the inspection station in a transfer position, in which said movable portion is flush with the table;
- before the inspection operation, lowering the movable portion (18) into an inspection position in which the movable portion (18) is set back from the bottom (4) of the container having at least a portion thereof spaced apart from the slide plate so that the sensor (15) can receive a light beam propagating in an inspection volume in which there is situated at least a portion of the bottom of the container spaced apart from the slide plate;
- keeping the movable portion (18) in its inspection position during the inspection operation; and
- after the inspection operation, and before transferring the container out from the inspection station, causing the movable portion (18) to move up into its transfer position.

11. An inspection method according to claim 10, **characterized in that** it consists in vertically lowering two movable portions (18) of the slide plate into the inspection position in which two symmetrical portions of the bottom of the container are spaced apart from the slide plate.

12. An inspection method according to claim 10 or claim 11, **characterized in that**, during the inspection operation, it consists in causing the container (3) to rotate about its vertical axis through at least one revolution.

13. An inspection method according to claims 11 and 12, **characterized in that**, during the rotation of the container, it consists in the light sensor (15) recovering the light beams propagating in the inspection volumes (V) in which there are situated at least two symmetrical portions of the bottom of the container spaced apart from the slide plate, and in analyzing the recovered light beams to detect an orthogonality defect of the bottom relative to the axis of symmetry of the container.

14. An inspection method according to any one of claims 10 to 12, **characterized in that** it consists in using an image sensor as the light sensor (15) and in positioning the light source (14) and the image sensor (15) relative to the movable portion (18) of the slide plate in such a manner that in the inspection position of the movable portion the sensor (15) can take an image of the profile of at least of the insweep (6) and of the neighboring portion of the bottom (4) of the container spaced apart from the slide plate.
